# EUROPEAN PATENT APPLICATION

(11) **EP 2 536 066 A1**
(43) Date of publication of application: **19.12.2012**
(21) Application number: 10846004.9
(22) Date of filing: 18.11.2010
(51) Int. Cl.: H04L 12/24

(54) **LINK DETECTING METHOD, APPARATUS AND SYSTEM**

(30) Priority: 20.02.2010 CN 201010117164
(71) Applicant: ZTE Corporation, Shenzhen, Guangdong 518057 (CN)
(72) Inventor: LI, Aimin, Guangdong 518057 (CN)
(74) Representative: Krauns, Christian
(86) International application number: PCT/CN2010/078877
(87) International publication number: WO 2011/100882

(57) **Abstract**

A link detecting method, apparatus and system are disclosed in the present invention and are related to the field of IP network communications. The method comprises: updating link path information if changes occur in a link path; and sending and receiving the bidirectional forwarding detection messages according to the updated link path information. The present invention solves the problem that the connection state of the link between the nodes cannot be detected accurately.

## Description

### Technical Field

The present invention relates to the field of IP network communications, and more particularly, to a link detecting method, apparatus and system.

### Background of the Related Art

With the development of network communication technologies, network equipment need to detect faults of communication between adjacent systems rapidly, so as to establish an alternative channel more quickly or switch to another link in the event of a failure.

The appearance of the Bidirectional Forwarding Detection (BFD) protocol provides a solution for the aforementioned problem.

The BFD's main object is to provide a low load method that can detect faults between two adjacent nodes quickly and detect interface fault, data link disconnection, and even failure of nodes themselves. In addition, the BFD is a single detection mechanism and can be applied to a variety of media or any protocol layer.

Normally, asynchronous mode detection of the BFD is used, that is, BFD packets is periodically sent on each link between two nodes, and if one node can not receive new BFD packets in a preset period of time, it can be determined that a problem occurs in a bidirectional path between this node and a neighbor node. In some cases, systems can negotiate not to send the BFD packets any more to reduce loads.

A BFD session may be a single-hop session, that is, a BFD neighbor relationship is established between two nodes at ends of a directly connected link to detect the link state between two directly connected neighbor nodes; it may also be a multi-hop session for detecting the connectivity between two non-adjacent nodes. For the single-hop BFD session, an interface for sending and receiving packets, which may be a logical or physical interface, is required to be specified; for the multi-hop BFD session, the interface for sending and receiving packets is not required to be specified, and sending and receiving of packets are based on a forwarding path.

The following problems exist in the process of implementing link connectivity detection through the BFD sessions.

For the multi-hop BFD session, especially for the connectivity detection between non-adjacent nodes, a multi-hop BFD session is established between two nodes. If the primary and secondary links have been switched before the links are detected by the BFD, and if at this point the BFD packet sending and detection path is not updated, Down will be reported to the upper layer if the primary link is still detected by the BFD. However, at this point, the link between the two nodes may be still accessible, thus the current link connection state between the two nodes cannot be reflected accurately.

In addition, when changes occur in the forwarding path due to route or label oscillation, if the path for sending BFD messages remains unchanged, false alarms of the connection state of the link between the nodes will be resulted in.

### Content of the Invention

The present invention provides a link detecting method, apparatus and system so as to solve the problem that connection state of a link between nodes cannot be detected accurately.

The present invention provides a link detecting method comprising: on a link of which connectivity is detected using bidirectional Forwarding Detection (BFD) messages,
updating link path information if changes occur in a link path; and
sending and receiving the bidirectional forwarding detection messages according to the updated link path information.

Before the step of updating the link path information if changes occur in the link path, the method further comprises:
establishing a corresponding relationship between an index of the link and a bidirectional forwarding detection session corresponding to the link.

Updating the link path information if changes occur in the link path comprises:
acquiring the index of the link when switching between primary and secondary links is detected;
acquiring the bidirectional forwarding detection session corresponding to the link according to the index; and
end nodes of the link updating path information of a link on which the bidirectional forwarding detection session sends and receives messages to path information of a link that operates normally after the switching.

Updating the link path information if changes occur in the link path comprises:
when route changes, label changes or port changes occur, notifying the end nodes of the link of the changed path information;
the end nodes updating the link path information according to the changed link path.

Before the step of updating the link path information if changes occur in the link path, the method further comprises:
sending and receiving bidirectional forwarding detection messages and detecting link connectivity by a field programmable gate array (FPGA) module.

The present invention also provides a link detecting apparatus comprising:
a BFD driving module configured to update link path information if changes occur in a link path; and
a sending and detecting module configured to send and receive bidirectional forwarding detection messages according to the updated link path information.

The BFD driving module comprises:
a first updating unit configured to, when switching between the primary and secondary links is detected, update the link path information to path information of a link that operates normally after the switching; and
a second updating unit configured to, when route changes, label changes or port changes occur, update the link path information according to the changed link path.

The BFD driving module is further configured to establish a corresponding relationship between an index of the link and a bidirectional forwarding detection session corresponding to the link.

The present invention also provides a link detecting system comprising a first link detecting apparatus and a second link detecting apparatus, there being at least one link between the first link detecting apparatus and the second link detecting apparatus, and at least one bidirectional forwarding detection session being carried on the link.

The first link detecting apparatus is configured to update link path information if changes occur in a link path, and send and receive bidirectional forwarding detection messages to and from the second link detecting apparatus according to the updated link path information.

The first link detection apparatus is further configured to establish a corresponding relationship between an index of the link and a bidirectional forwarding detection session corresponding to the link.

Embodiments of the present invention provides a link detecting method, apparatus and system in which on a link of which connectivity is detected using bidirectional Forwarding Detection (BFD) messages, link path information is updated if changes occur in a link path, and the bidirectional forwarding detection messages are sent and received according to the updated link path information, so as to perform bidirectional forwarding detection on the new link path after changes occur in the link path, thereby solving the problem that the connection state of the link between the nodes cannot be detected accurately.

### Brief Description of Drawings

FIG. 1 is a flow chart of a link detecting method in accordance with an embodiment of the present invention;
FIG. 2 is a block diagram of a BFD architecture used in an embodiment of the present invention;
FIG. 3 is a schematic diagram of a networking environment applied in an embodiment of the present invention;
FIG. 4 is a block diagram of a link detecting apparatus in accordance with an embodiment of the present invention; and
FIG. 5 is a block diagram of a BFD driving module 301 in the FIG. 3.

### Preferred Embodiments of the Present Invention

For a multi-hop BFD session, especially for the connectivity detection between non-adjacent nodes, a multi-hop BFD session is established between two nodes. If the primary and secondary links have been switched before the links are detected by the BFD, and if at this point the BFD packet sending and detection path is not updated, Down will be reported to the upper layer if the primary link is still detected by the BFD. However, at this point, the link between the two nodes may be still accessible, thus the current link connection state between the two nodes cannot be reflected accurately. In addition, when changes occur in the forwarding path due to route or label oscillation, if the path for sending BFD messages remains unchanged, false alarms of the connection state of the link between the nodes will be resulted in.

In addition, sending and detection of the BFD messages are generally implemented by a micro-engine (such as node CPU). However, the performance of the micro-engine is limited, and as a forwarding chip, it needs to process very complicated works. The BFD messages have very high requirements on the packet sending rate and detection performance, for example, in a time interval of 10ms or even smaller. If the works are processed by the micro-engine, because its performance is difficult to meet the requirement, higher cost may be required to be invested to complete the works. However, the burden of the micro-engine will thus be inevitably increased, and greater negative effect on its forwarding performance will be caused as well. Especially when traffic is heavy, the micro-engine is required to forward messages, sending and detection of the BFD messages may be affected to a certain extent, and even oscillation of the BFD session will occur, resulting in false alarms of the state.

In order to solve the aforementioned problem, the first embodiment of the present invention provides a link detecting method, in which a Field-Programmable Gate Array (FPGA) device can be used to replace a forwarding micro-engine for periodic packet sending and detection, so as to, on the one hand, increase the sending frequency and detection aging of the BFD messages, and on the other hand, free the forwarding micro-engine from onerous tasks to solely forward data packets of normal services, thereby reducing the burden of the micro-engine and improving the forwarding performance of the forwarding micro-engine.

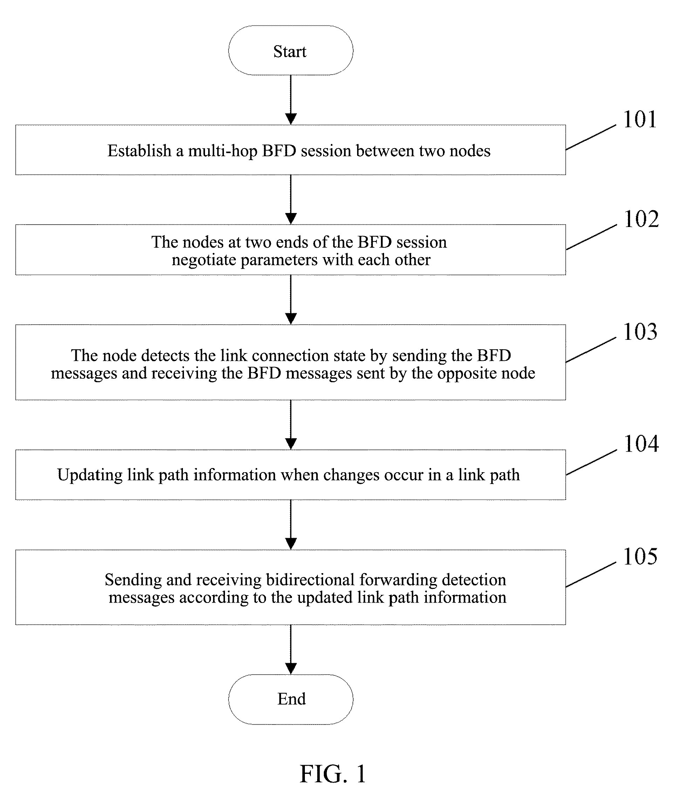

The process in which the link detecting method in accordance with the embodiment of the present invention is used to complete the link detection comprises the following steps, as shown in FIG. 1.

In step 101, a multi-hop BFD session is established between two nodes.

In this step, Border Gateway Protocol (BGP) neighbors is established using the BGP such that the BFD session is enabled between the BGP neighbors, and a local loopback interface is used between the BGP neighbors. The packet sending interval may be configured between 10∼990ms. Since the FPGA packet sending and detection are used, the packet sending interval may be even smaller.

In step 102, the nodes at two ends of the BFD session negotiate parameters with each other.

In this step, the nodes at the two ends of the BFD session negotiate and send the BFD parameters. The specific process is as follows.

After a session link is established successfully, a node negotiates time parameters with the opposite node by sending a BFD message (identified by a flag bit P) which is used for parameter negotiation. The time parameters mainly include sending time interval and detection timeout interval. The node always carries its own configuration parameters in the sent BFD message, and the opposite node calculates the final message sending time interval and the detection timeout interval using the method specified in the protocol based on the parameters carried in the received BFD messages and its own configuration parameters. Upon success of the parameter negotiation, the BFD message for detection and the related information are sent to a forwarding plane and a FPGA.

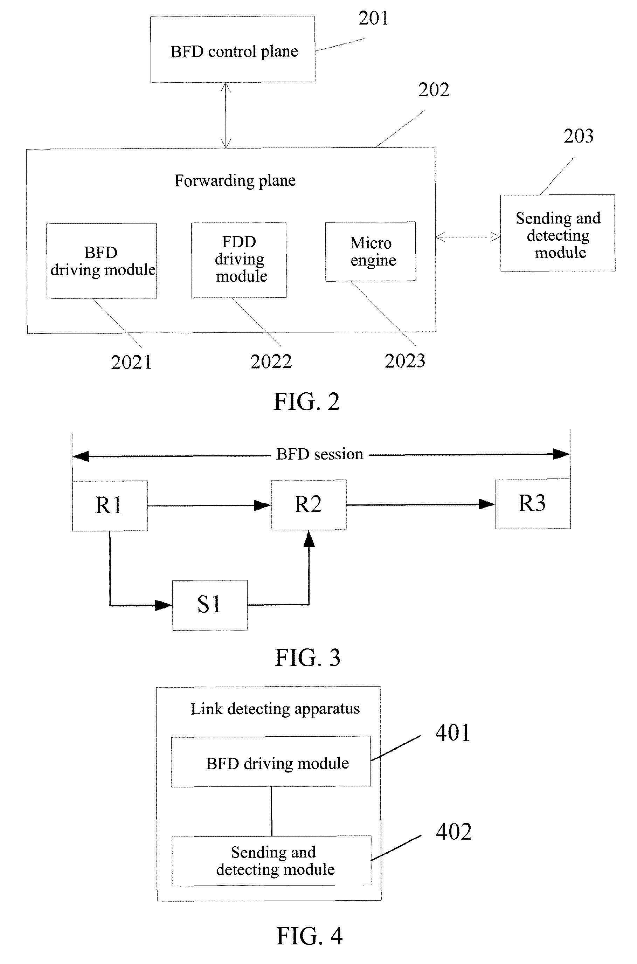

The BFD architecture used in the embodiment of the present invention is shown in FIG. 2, which comprises a BFD control plane 201, a forwarding plane 202, and a sending and detecting module 203. The forwarding plane 202 comprises a BFD driving module 2021, a FRR (Fast Reroute) driving module 2022 and a micro-engine 2023. Specifically, the sending and detecting module 203 is a FPGA. The BFD driving module 2021 and the FRR driving module 2022 configure related information for the micro-engine 2023 and the FPGA to maintain related table entries, including a global session table and a downlink local BFD session table required by the micro-engine 2023 to perform uplink forwarding and a BFD packet sending table and a BFD detection table required by the FPGA to send and detect packets. The BFD driving module 2021 and the FRR driving module 2022 process services in the same process and interact with each other through a function call relationship.

The BFD packet sending table is used to store the related information, such as the packet sending interval and message length, of the BFD messages sent by the node. The BFD detection table is used to record the received related information, such as the detection timeout interval, of the BFD messages sent by the opposite node.

In step 103, the node detects the link connection state by sending the BFD messages and receiving the BFD messages sent by the opposite node.

In this step, after the BFD session between the two nodes is UP (indicating that the session is in an activated state and the link connection state is normal), BFD control messages and detection configuration information are sent to the forwarding plane.

Normally, the BFD control messages and the detection configuration information are sent by a master CPU. For different BFD session types, the initiated sessions may be different. Single-hop and IP multi-hop BFD sessions may be initiated by both parties, and for the Ldp-lsp and LDP-rsv sessions, an active party and a passive party are specified among the two parties of the session, and the active party initiates the detection.

The uplink global session table and downlink local session table required by the micro-engine to perform forwarding are implemented in a HASH manner, the existence of the uplink global session table is to enable the BFD messages to be correctly forwarded to a board to which the session belongs (that is, a single board in which the session is located, a FPGA of the board performs the packet sending and detection) after they are received from other boards. The downlink local session table maintains the relationship between local and remote session identifiers of the BFD and the BFD session IDs.

The packet sending table and the detection table of the FPGA are implemented by writing a register directly. There is a one-to-one mapping relationship between internal memory addresses of the FPGA and session IDs, and messages, sending parameters and detection parameters of each session are stored in the corresponding memory or storage. The FPGA uses a 100M system clock to poll and scan each session, and its scan interval is on the order of ns, the full scanning of 1024 sessions on the single board can be completed on the order of microsecond, which is almost negligible compared with the packet sending interval of 10ms. Therefore, the packet sending precision of the FPGA can be fully guaranteed. During scanning of the sessions, for the enabled sessions, the FPGA will record an instant time value of enabling, calculate the time interval between the current time and the enabling instant in each scan, and check whether the time interval reaches the configured packet sending interval, and if yes, start the packet sending processing.

The fault detection is implemented by the FPGA in a first packet trigger manner, that is, after a forwarding driving part enables the FPGA configuration, the FPGA does not start the detection immediately, but start the detection when receiving the first BFD message from the opposite node. According to the general network condition, the first detection message is required to be received within 5s, otherwise, it is believed that the first packet timeout fault occurs, and at this point, it can be considered as link fault. For the enabled and detected session, the FPGA scans the system clock in the same manner as sending of the BFD messages, and records a time value whenever a message is received. If the messages from the opposite node can be received within a certain timeout interval continuously, the link is considered as normal; if the BFD messages from the opposite node are not received in the timeout interval, it is considered that session timeout occurs, and an interrupt signal is generated and reported to the local micro-engine.

When there are a larger number of sessions configured, the case of multiple simultaneous timeout sessions may occur. In order to prevent the multiple timeout sessions from reporting interrupts frequently, resulting in the micro-engine being too busy, the FPGA performs the processing by updating the interrupt every 1ms. Interrupt states of all sessions are in an interrupt OFF state in a 1ms update cycle. After the interrupt state is updated, an interrupt report micro-engine is activated. After the micro engine has read the interrupt states of all the sessions, it clears the interrupt state, so as to guarantee that no session interrupt state will be lost.

In step 104, link path information is updated when changes occur in a link path.

There are two cases for the changes in the link path. In the first case, Fast Reroute (FRR) switching occurs, and in the second case, route changes, label changes or port changes occur. The first case will be described first.

This step is described by taking a network environment shown in FIG. 3 as example. A multi-hop BFD session between IP nodes is established between a router R1 and a router R3 to detect link accessibility between the detection devices R1 and R3, which are used as end nodes of the BFD session. There is FRR protection between R1 and R3, where R1-S1-R3 is a primary link, and R1-R2-R3 is a secondary link, and S1 is a switcher (or router apparatus). Normally, the packet sending and detection is performed by the BFD along the primary link. When the primary link operates properly, both end nodes send and receive BFD messages through the primary link, and path information of the primary link is the link path information.

When a fault occur in the link between S1-R3, the router R1 cannot perceive the fault in time, and can perform protection switching of the FRR only through convergence of upper layer route, thus interrupt of a long time will be resulted in. Therefore, at this point, the BFD is required to perceive the link state as soon as possible and protection switching is performed in time through the FRR. The BFD detects DOWN of the primary link quickly and notifies the FRR quickly to switch to the secondary link, and meanwhile, the BFD notifies the application session of DOWN.

When a fault occurs in the link between R1-S1, the router R1 can perceive in time changes in the link through bottom layer hardware or port state. At this point, a BSP or port of R1 may notify in time the FRR to trigger the protection switching from the primary link to the secondary link between R1 to R3. In order to update BFD packet sending link path information to the secondary link path more quickly, the forwarding plane maintains a corresponding relationship table between links, FRR indexes and BFD session IDs, wherein, the FRR indexes are used to query offset values of the primary and secondary routes and to locate the primary and secondary route entries directly; the BFD session IDs can be indexed to the corresponding session information directly.

When the FRR driving module of the node R1 (through other means, such as the bottom layer hardware or port state) perceives a link fault and performs switching, the FRR driving module notifies the BFD driving module of the node of the FRR index to inform the BFD driving module that the link path information has changed, and to indicate the BFD driving module to update the link path information from the primary link to the secondary link. The BFD driving module corresponds to the corresponding BFD session directly according to the FRR index, and updates path information in the BFD message of the corresponding BFD session to secondary path information. After the primary link is restored, the node performs the FRR or updates route through the route convergence, and switches traffics from the secondary link back to the primary link. At this point, the route module notifies the BFD control module to perform BFD session updating, which is specifically described in the following description for the second case.

The second case will be described below. For the multi-hop BFD, when changes, such as route changes (for example, the number of load sharing links changes), label changes or port changes (for example, the number of the SMARTGROUP interface members changes), occur in the forwarding path, if the BFD messages are still sent and received along the original link path, false alarms of the link state will be resulted in. In the embodiment of the present invention, when the node detects changes in the forwarding path, the BFD control plane of the node performs a sending update operation on the BFD session, to the BFD service driver of the forwarding plane. The BFD driving module of the forwarding plane is responsible for notifying the FPGA of such changes, and the FPGA re-performs the packet sending and detection according to the updated link path information, and sends the BFD messages sent by the node to the opposite node along the current link path on the basis of "best effort", and strives to ensure the stability of the BFD session such that the BFD session state can show the link accessibility between the two nodes as accurately as possible.

It should be noted that since the BFD session is bidirectional, the two end nodes of the BFD session will perform the same operation on such changes, therefore, the route module of the node only needs to notify the BFD module of the node of such changes.

In step 105, bidirectional forwarding detection messages are sent and received according to the updated link path information.

The embodiment of the present invention also provides a link detecting apparatus, which, as shown in FIG. 4, comprises:
a BFD driving module 401 configured to update link path information if changes occur in a link path; and
a sending and detecting module 402 configured to send and receive bidirectional forwarding detection messages according to the updated link path information.

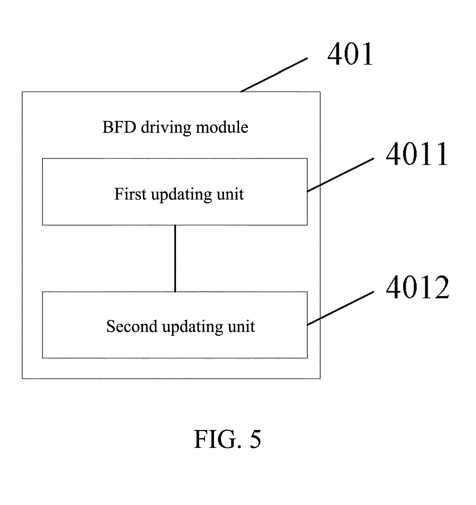

Furthermore, the structure of the BFD driving module is as shown in FIG. 5 and comprises:
a first updating unit 4011 configured to, when switching between the primary and secondary links is detected, update the link path information to path information of a link that operates normally after the switching; and
a second updating unit 4012 configured to, when route changes, label changes or port changes occur, update the link path information according to the changed link path.

Furthermore, the BFD driving module 401 is further configured to establish a corresponding relationship between an index of the link and a bidirectional forwarding detection session corresponding to the link.

The present invention also provides a link detecting system comprising a first link detecting apparatus and a second link detecting apparatus, where there is at least one link between the first link detecting apparatus and the second link detecting apparatus, and at least one bidirectional forwarding detection session is carried on the link.

The first link detecting apparatus is configured to update link path information if changes occur in a link path, and send and receive bidirectional forwarding detection messages to and from the second link detecting apparatus according to the updated link path information.

Furthermore, the first link detection apparatus is further configured to establish a corresponding relationship between an index of the link and a bidirectional forwarding detection session corresponding to the link.

It may be understood by those skilled in the art that all or some of steps contained in the described method embodiment can be implemented by related hardware instructed by programs which may be stored in a computer readable storage medium. The executed program comprises one of the steps of the method embodiment or a combination thereof.

In addition, each functional unit in each embodiment of the present invention can be implemented in the form of a hardware or software functional module. If the integrated module is implemented in the form of a software function module and sold or used as an independent product, it may also be stored in computer readable storage mediums.

The aforementioned storage medium may be a read-only memory, disk or CD-ROM.

The above description is only the preferred embodiments of the present invention and the protect scope of the present invention is not limited thereto. Any variation or substitution occurring easily to those skilled in the art within the technical scope disclosed in the present invention should be covered in the protect scope of the present invention. Therefore, the protection scope of the present invention should be subject to the protection scope of the claims.

### Industrial Applicability

Using the method in accordance with the present invention, compared with the prior art, packet sending and detection can be performed using the FPGA device, thereby significantly reducing burden of the micro-engine and increasing its forwarding efficiency on the one hand, and decreasing the packet sending rate to one tenth of 1ms and significantly increasing the detection aging on the other hand. Meanwhile, using the BFD and FRR association processing method, the present invention not only implements the rapid switching in the forwarding plane and relatively increases the switching efficiency, but also achieves the purpose of rapid and real-time detection of the current valid link, thus significantly reducing the probability of the bottom layer reports Down (the connection state between the two nodes is off) to the upper layer mistakenly.

## Claims

1. A link detecting method comprising: on a link of which connectivity is detected using bidirectional forwarding detection (BFD) messages,
updating link path information if changes occur in a link path; and
sending and receiving the bidirectional forwarding detection messages according to the updated link path information.

2. The link detecting method according to claim 1, wherein before the step of updating the link path information if changes occur in the link path, the method further comprises:
establishing a corresponding relationship between an index of the link and a bidirectional forwarding detection session corresponding to the link.

3. The link detecting method according to claim 1 or 2, wherein updating the link path information if changes occur in the link path comprises:
acquiring the index of the link when switching between primary and secondary links is detected;
acquiring the bidirectional forwarding detection session corresponding to the link according to the index; and
end nodes of the link updating path information of a link on which the bidirectional forwarding detection session sends and receives messages to path information of a link that operates normally after the switching.

4. The link detecting method according to claim 1, wherein updating the link path information if changes occur in the link path comprises:
when route changes, label changes or port changes occur, notifying the end nodes of the link of the changed path information; and
the end nodes updating the link path information according to the changed link path.

5. The link detecting method according to claim 1, wherein before the step of updating the link path information if changes occur in the link path, the method further comprises:
sending and receiving bidirectional forwarding detection messages and detecting link connectivity by a field programmable gate array (FPGA) module.

6. A link detecting apparatus comprising:
a bidirectional forwarding detection (BFD) driving module configured to update link path information if changes occur in a link path; and
a sending and detecting module configured to send and receive bidirectional forwarding detection messages according to the updated link path information.

7. The link detecting apparatus according to claim 6, wherein the BFD driving module comprises:
a first updating unit configured to, when switching between the primary and secondary links is detected, update the link path information to path information of a link that operates normally after the switching; and
a second updating unit configured to, when route changes, label changes or port changes occur, update the link path information according to the changed link path.

8. The link detecting apparatus according to claim 6, wherein the BFD driving module is further configured to establish a corresponding relationship between an index of the link and a bidirectional forwarding detection session corresponding to the link.

9. A link detecting system comprising a first link detecting apparatus and a second link detecting apparatus, there being at least one link between the first link detecting apparatus and the second link detecting apparatus, and at least one bidirectional forwarding detection session being carried on the link; and wherein
the first link detecting apparatus is configured to update link path information if changes occur in a link path, and send and receive bidirectional forwarding detection messages to and from the second link detecting apparatus according to the updated link path information.

10. The link detecting system according to claim 9, wherein the first link detection apparatus is further configured to establish a corresponding relationship between an index of the link and a bidirectional forwarding detection session corresponding to the link.
